# DEMANDE DE BREVET EUROPEEN

(11) **EP 4 431 480 A1**
(43) Date de publication de la demande: **18.09.2024**
(21) Numéro de dépôt: 24305376.6
(22) Date de dépôt: 12.03.2024
(51) Int. Cl.: C04B 26/26

(54) **REVETEMENT DE VOIRIE COMPRENANT DE LA POIX**

(30) Priorité: 13.03.2023 FR 2302318
(71) Demandeur: Eiffage Infrastructures, 78140 Vélizy-Villacoublay (FR)
(72) Inventeur: OLARD, François, 69006 LYON (FR); POUGET, Simon, 69004 LYON (FR); VAN ROMPU, Julien, 78140 VELIZY VILLACOUBLAY (FR); SCHREVEL, Florent, 69560 SAINTE COLOMBE (FR); BONNEEL, Luc, 69200 VENISSIEUX (FR)
(74) Mandataire: Plasseraud IP

(57) **Abrégé**

La présente invention concerne, selon un premier aspect, un revêtement de voirie comprenant :
a) des granulats,
b) de la poix,
c) du bitume,
d) au moins un polymère,
et présentant un ratio massique poix sur bitume compris entre 0,35 et 2, préférentiellement entre 0,35 et 1,8, plus préférentiellement entre 0,35 et 1,5 et encore plus préférentiellement entre 0,35 et 1.

## Description

### Domaine technique

La présente invention relève du domaine des revêtements de voirie. Plus particulièrement, la présente invention relève des revêtements de voirie comprenant un liant d'origine végétale, typiquement de la poix d'huile de tall.

### Technique antérieure

La diminution de l'impact de l'activité humaine sur l'environnement représente aujourd'hui un enjeu mondial majeur. Le recyclage de matériaux permet de diminuer cet impact.

En particulier la fabrication et la transformation de revêtements de voirie, notamment à base d'enrobés bitumineux sont des activités dont l'empreinte environnementale n'est pas négligeable (consommation énergétique, émission de gaz à effet de serre). En outre, le bitume est une matière première d'origine pétrolière non renouvelable à l'échelle humaine.

Il en résulte que les acteurs du domaine cherchent à développer de nouvelles formulations et de nouvelles technologies tenant compte de ces facteurs économiques et environnementaux.

Par exemple, le document FR 3 035 112 A1 divulgue un liant d'origine végétale pouvant être utilisé en remplacement d'une partie du bitume, entre autres, dans un revêtement en asphalte. Le liant d'origine végétale est préalablement modifié à son incorporation au produit bitumineux.

Outre l'introduction de matières végétales pour limiter la quantité de bitume dans les revêtements de voirie, la diminution de la température de fabrication d'enrobés bitumineux permet de diminuer l'énergie consommée, et ainsi de baisser encore plus l'impact sur l'environnement.

Par exemple, le document FR 2 901 279 A1 divulgue un liant thermofusible à base d'asphalte ou de bitume comprenant au moins deux additifs pour abaisser la température de fabrication d'un produit asphaltique.

On peut également citer le document FR 3 028 862 A1 qui divulgue un adjuvant de réjuvénation permettant de recycler des agrégats d'enrobés pour fabriquer un nouvel enrobé bitumineux.

Bien que les solutions proposées à ce jour présentent un grand intérêt environnemental, il serait bénéfique de pouvoir diminuer davantage la quantité de bitume nécessaire et augmenter la part de recyclage des enrobés bitumineux.

### Objectifs de l'invention

Ainsi, un objectif de l'invention est d'optimiser le ratio liant d'origine végétal/bitume dans un revêtement de voirie.

Un autre objectif de l'invention est de limiter, voire supprimer tout traitement du liant d'origine végétale préalablement à son incorporation dans un revêtement de voirie, traitement généralement réalisé à une température élevée supérieure à 160°C pour des raisons de bonne homogénéité, de dispersion du polymère et par ailleurs de viscosité adaptée aux procédés industriels.

Un autre objectif de l'invention est de s'affranchir de l'étape de stockage du liant d'origine végétale avant son incorporation dans un revêtement de voirie, étape usuelle pour les bitumes modifiés aux polymères réalisée habituellement au-delà de 140°C et plus fréquemment au-delà de 160°C (cf « Emploi des liants bitumineux modifiés, des bitumes spéciaux et des bitumes avec additifs en techniques routières », World Road Association (PIARC)).

Un objectif supplémentaire de l'invention est de maximiser la part d'enrobés bitumineux recyclés dans un revêtement de voirie.

Proposer un procédé de préparation d'un revêtement de voirie à température abaissée représente également un objectif de l'invention.

Il va de soi que l'atteinte de ces objectifs n'a d'intérêt que si les performances thermomécaniques du revêtement de voirie obtenu sont satisfaisantes.

### Résumé de l'invention

Ces objectifs, parmi d'autres, sont atteints par la présente invention qui concerne, selon un premier aspect, un revêtement de voirie comprenant :
a) des granulats,
b) de la poix,
c) du bitume,
d) au moins un polymère,
et présentant un ratio massique poix sur bitume compris entre 0,35 et 2.

Selon un autre aspect, il est proposé un procédé de préparation d'un revêtement de voirie tel que décrit ci-dessus comprenant une étape de mélange à une température comprise entre 90°C et 150°C des composés suivants :
a) des granulats,
b) de la poix,
c) du bitume,
d) au moins un polymère,
et présentant un ratio massique poix sur bitume compris entre 0,35 et 2.

### Brève description des dessins

**Fig. 1**

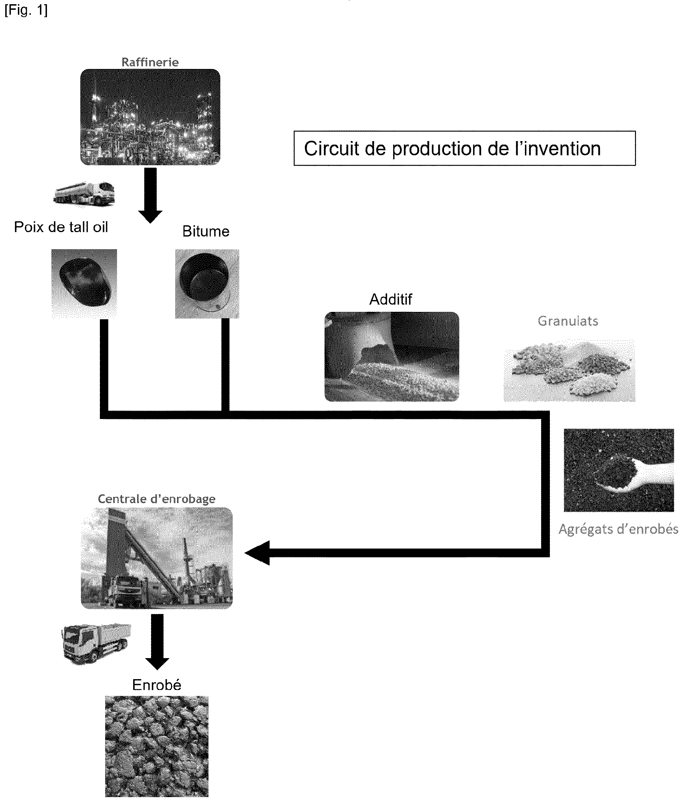

   [Fig. 1] La figure 1 représente de manière schématique le circuit de production selon l'invention.
**Fig. 2**

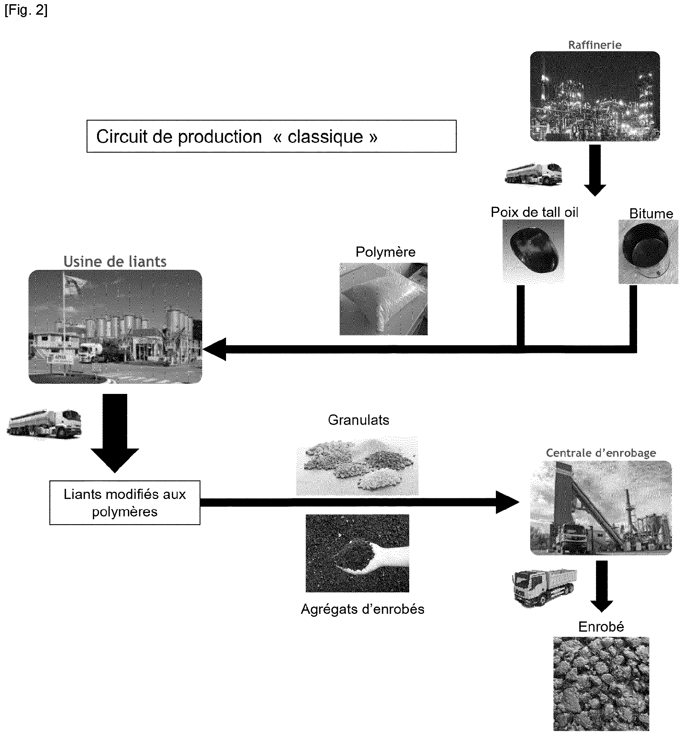

   [Fig. 2] La figure 2 représente de manière schématique le circuit de production classique hors invention

### Description détaillée de l'invention

Comme indiqué précédemment, la présente invention concerne, selon un premier aspect, un revêtement de voirie comprenant :
a) des granulats,
b) de la poix,
c) du bitume,
d) au moins un polymère,
et présentant un ratio massique poix sur bitume compris entre 0,35 et 2.

### Le revêtement de voirie

Dans le cadre de la présente invention, le revêtement de voirie s'entend dans sa globalité, quel que soit son état physique. Ainsi, dans le cadre de la présente invention, le revêtement de voirie s'entend aussi bien par la composition dans son état initial, c'est-à-dire à l'état fondu, comme dans son état final, c'est-à-dire durci après mise en place sur site.

Dans un mode de réalisation, le revêtement de voirie est à une température comprise entre 90°C et 150°C.

### Les granulats

De manière générale, le revêtement de voirie selon l'invention comprend entre 90% en poids et 97% en poids de granulats.

Les granulats ordinaires connus de l'homme du métier satisfont à la réalisation de l'invention. De manière générale, un granulat désigne une matière minérale de taille inférieure à 45 mm (NF P 18-545).

De manière avantageuse, dans le revêtement de voirie selon l'invention, au moins une partie des granulats provient d'agrégats d'enrobés (AE).

Les AE, au sens de la norme NF EN 13108-8, 2006, résultent du fraisage des couches de revêtements de voirie usagés, ainsi que du concassage de plaques d'enrobé, des déchets ou morceaux de plaques d'enrobé et des surplus de production d'enrobé.

L'ensemble du réseau routier représente potentiellement un gisement de plusieurs millions de tonnes d'AE. Le recyclage des AE est de plus en plus systématique, y compris dans des fabrications à froid. Aujourd'hui, est considéré comme faible, un taux de recyclage de 10%, moyen entre 10 et 30% et fort au-delà. De très nombreuses usines d'enrobage sont équipées en France pour permettre le recyclage systématique des agrégats d'enrobé.

De manière avantageuse, dans le revêtement de voirie selon l'invention, entre 20% et 100% des granulats proviennent d'AE, de manière plus avantageuse plus de 30%, de manière encore plus avantageuse plus de 40%, et plus préférentiellement plus de 50%.

### La poix

Dans un mode de réalisation, la poix est de la poix d'huile de tall oil. La poix d'huile de tall oil est un sous-produit issu de la fabrication de pâte à papier par le procédé Kraft. Plus précisément, la poix d'huile de tall oil est un produit obtenu par distillation d'huile de tall oil, qui se présente sous forme visqueuse à température ambiante. Elle se compose, par exemple, d'environ 30% d'acides résiniques, 30% d'acides gras libres, et 40% d'acides gras estérifiés.

La poix d'huile de tall oil présente l'avantage d'être un résidu d'un processus de transformation chimique, biosourcé et à faible valeur ajoutée. Elle présente également de bonnes propriétés de compatibilité avec le bitume et d'adhésion sur les granulats.

L'origine végétale et renouvelable de la poix d'huile de tall oil (industries papetière et sylvicole) en font un véritable « stock de carbone biogénique ». La quantité de COz fixée par les végétaux pendant leur croissance, par photosynthèse, est supérieure à la quantité de COz émise par transformation industrielle des matières premières (cf « FDES Enrobé Biophalt », site internet Base-INIES.fr). En outre, ladite matière première est totalement découplée du risque de concurrence avec le circuit agro-alimentaire.

De manière avantageuse, le revêtement de voirie selon l'invention comprend entre 0,75% et 3,25%, voire de manière avantageuse entre 1,5% et 2,5% en poids de poix d'huile de tall oil.

### Le bitume

Dans le cadre de l'invention, le bitume contenu dans le revêtement de voirie selon l'invention est choisi parmi les bitumes routiers définis selon la norme NF EN 12591, de préférence parmi les bitumes de grades 0/10, 10/20, 20/30, 30/45, 35/50, 40/60, 50/70, 70/100, 100/150 et 160/220, les bitumes de grade inférieur à 50/70 étant particulièrement préférés.

De manière avantageuse, au moins une partie, de préférence 100%, du bitume est un bitume recyclé, provenant par exemple d'agrégats d'enrobés (AE).

Ainsi dans un mode de réalisation, entre 20% et 100% du bitume du revêtement de voirie selon l'invention provient d'AE, de manière plus avantageuse plus de 30%, de manière encore plus avantageuse plus de 40%, de préférence plus de 60%, et plus préférentiellement plus de 75%. Ainsi, le bitume peut être un mélange d'un ou plusieurs bitumes recyclés et/ou d'un ou plusieurs bitumes neufs.

De manière avantageuse, le revêtement de voirie selon l'invention comprend entre 2% en poids et 9% en poids de bitume.

### Le ratio massique poix sur bitume

De manière générale, dans le revêtement de voirie selon l'invention, la quantité totale de poix et de bitume représente entre 5% en poids et 10% en poids.

Selon l'invention, le ratio poix sur bitume est compris entre 0,35 et 2.

De préférence le ratio poix sur bitume dans le revêtement de voirie selon l'invention, est compris entre 0,35 et 1,8, plus préférentiellement entre 0,35 et 1,5, et encore plus préférentiellement entre 0,35 et 1.

### Le polymère

Conformément à l'invention, le revêtement de voirie comporte au moins un polymère.

De préférence, dans le revêtement de voirie selon l'invention le polymère est choisi dans le groupe comprenant les polyoléfines, les composés à base de styrène-butadiène, le styrène-butadiène-styrène (SBS), le styrène-polyisopropène-styrène, le polystyrène-b-poly(éthylène-butylène)-b-polystyrène, les esters de vinyle et de butyle, les polyuréthannes et leurs mélanges, de préférence le polymère est le SBS.

De manière avantageuse, le revêtement de voirie selon l'invention comprend entre 0,1% en poids et 0,6% en poids de polymère, de préférence entre 0,15% en poids et 0,4% en poids.

### Les performances mécaniques

Un revêtement de voirie doit résister aux sollicitations mécaniques de la circulation, ainsi qu'aux sollicitations climatiques. Le trafic génère dans le revêtement des contraintes mécaniques, tandis que la température agit sur la rigidité des matériaux. Plus la température est élevée, moins le matériau est rigide et des déformations permanentes peuvent survenir, c'est ce que l'on appelle l'orniérage. Cette détérioration nuit au confort et à la sécurité des usagers et limite la pérennité du revêtement de voirie. Dans le cas d'une température plus froide, le revêtement de voirie devient plus rigide et donc plus sensible (fragilité) aux sollicitations mécaniques. Ces sollicitations répétées, entraine une fatigue dite « thermo-mécanique » dans le matériau, et peut se traduire par l'apparition de fissures dans les enrobés. Il est à noter que dès qu'une fissure apparaît dans le revêtement de voirie, la détérioration de celui-ci croît rapidement. La teneur en liant est aussi un critère à apprécier avec soin dans la composition d'un revêtement de voirie. Une trop forte teneur en liant induit une susceptibilité des matériaux au fluage par haute température, et inversement une teneur en liant trop faible fragilise le revêtement de voirie à basse température. Le revêtement de voirie peut par ailleurs, au contact prolongé de l'eau, subir d'autres dégradations : perte d'adhésion entre le bitume et les matières minérales conduisant à une baisse de la résistance thermo-mécanique.

Les revêtements de voirie sont classés dans différentes catégories en fonction de leurs performances mécaniques (norme NF EN 13108-1). Selon ses performances mécaniques un revêtement de voirie pourra être utilisé pour revêtir une autoroute ou plutôt une route départementale ou encore une piste cyclable. En d'autres termes, des propriétés mécaniques insuffisantes pour une application donnée peuvent être suffisantes pour une autre. Par exemple, la résistance à l'orniérage doit être plus élevée pour une application sur autoroute que sur une piste cyclable.

En particulier, le revêtement de voirie selon l'invention présente une déformation à l'orniérage inférieure ou égale 10% ou 7,5% ou 5% après 30 000 cycles et/ ou une déformation à l'orniérage inférieure ou égale 15% ou 10% ou 7,5% après 10 000 cycles et/ou une déformation à l'orniérage inférieure ou égale 15% 10% à 3 000 cycles déterminée selon la méthode de la norme NF EN 12697-22, et/ou un ITSR d'au moins 70%, de préférence d'au moins 80% déterminé selon la méthode de la norme NF EN 12697-12.

### Le procédé de préparation

Comme mentionné plus haut, l'invention concerne également un procédé de préparation d'un revêtement de voirie tel que décrit ci-dessus comprenant une étape de mélange à une température comprise entre 90°C et 150°C des composés suivants :
a) des granulats,
b) de la poix,
c) du bitume,
d) au moins un polymère,
et présentant un ratio massique poix sur bitume compris entre 0,35 et 2, préférentiellement entre 0,35 et 1,8, plus préférentiellement entre 0,35 et 1,5, et encore plus préférentiellement entre 0,35 et 1.

### Température du procédé

L'influence de la température de fabrication sur les propriétés mécaniques des revêtements de voirie est significative. En particulier, dans le cadre de l'utilisation d'agrégats d'enrobé, plus la température de fabrication augmente, plus le bitume contenu dans les agrégats d'enrobé est susceptible de se remobiliser et de créer de nouveaux liens inter-granulaires au sein de l'enrobé.

Le procédé selon l'invention est réalisé à une température comprise entre 90°C et 150°C. De manière avantageuse, l'étape de mélange peut être réalisée à une température comprise entre 100°C et 140°C.

### Les composés a, b, c et d

Les composés a, b, c et d sont tels que décrits précédemment.

En particulier, dans le procédé selon l'invention, le bitume et les granulats peuvent être introduits, au moins en partie sous forme d'agrégat d'enrobés.

Dans le procédé selon l'invention, le composé d peut être introduit sous forme de granulés comprenant ledit polymère et du bitume et/ou de la poix. Ce type de granulés peut être fabriqué selon le procédé décrit dans le document EP 1 765 914 A1. De manière générale, ce type de granulés contient un taux de polymères compris entre 10 et 90 %, préférentiellement entre 20 et 60 %. Un exemple de tels granulés est le composé Eiffaprène^{®} commercialisé par la société Eiffage.

### Mise en œuvre du procédé

Dans un mode de mise en oeuvre particulier, le procédé selon l'invention est réalisé en usine d'enrobage. En d'autres termes, le mélange des composés a, b, c et d est effectué au sein de l'usine d'enrobage. Le revêtement de voirie obtenu est ensuite acheminé jusqu'au chantier auquel celui-ci est destiné pour application (figure 1). Le procédé selon l'invention présente l'avantage de s'affranchir du passage par une usine de liants, passage classique pour la production de liants végétaux, avant d'être mélangé aux granulats et aux agrégats d'enrobés dans la centrale d'enrobage (figure 2).

### Exemples

### Exemple 1 : Préparation de différents revêtements de voirie

Huit revêtements de voirie selon l'invention ont été préparés. Les différents composants de chacun des revêtements de voirie E1 à E8 ont été mélangés à une température de 120°C, 130°C, 140°C ou 150°C. Les pourcentages massiques de chacun des composants, la température de fabrication et les caractéristiques des granulats sont récapitulés dans le tableau 1 ci-dessous.

Les agrégats d'enrobés contiennent du bitume (quantité reportée dans la ligne bitume du tableau 1 ci-dessous) et des gravillons 6/10 (quantités reportées dans la ligne granulats du tableau 1 ci-dessous). Le pourcentage en poids de la teneur en bitume des agrégats d'enrobés dépend de la source de ces agrégats. Dans les exemples E1 à E8, la teneur en bitume dans les agrégats d'enrobés varie de 4,3% en poids à 5,8% en poids.

Le styrène-butadiène-styrène est introduit sous forme de granules en mélange avec du bitume. Le bitume compris dans ces granules est comptabilisé dans la ligne bitume du tableau 1 ci-dessous.

**[Tableau 1]**

| | Granulats (a) (% massique) | | Poix (b) | Bitume (c) | Styrène-butadiène-styrène (d) | Ratio massique poix/bitume |
|---|---|---|---|---|---|---|
| | | | (% massique) | (% massique) | | |
| | matière minérale | Agrégats d'enrobés | | | (% massique) | |
| E1 | 39,77 alluvionnaire | 54,9 | 1,50 | 3,65 | 0,18 | 0,41 |
| E2 | 42,80 alluvionnaire | 52 | 1,76 | 3,26 | 0,18 | 0,54 |
| E3 | 42,80 alluvionnaire | 52 | 1,94 | 3 | 0,26 | 0,65 |
| E4 | 47,4 tuf rhyodacitique | 47,27 | 2,24 | 2,95 | 0,14 | 0,76 |
| E5 | 47,4 tuf rhyodacitique | 47,27 | 2,38 | 2,73 | 0,22 | 0,87 |
| E6 | 37,5 diorite | 57,28 | 1,99 | 3,03 | 0,20 | 0,66 |
| E7 | 49,79 diorite | 45 | 2,49 | 2,51 | 0,21 | 0,99 |
| E8 | 32,8 diorite | 62,2 | 1,76 | 2,976 | 0.264 | 0,59 |

### Exemple 2 : Propriétés mécaniques des revêtements de voirie selon l'invention

Le pourcentage de vide à 60 girations (PCG V60 g) des revêtements de voirie selon l'invention a été mesuré en suivant le protocole de la norme NF EN 12697-31.

La détermination de la sensibilité à l'eau des revêtements de voirie selon l'invention a été mesurée en suivant le protocole ITSR (indirect tensile strength ratio (rapport de résistance à la traction indirecte)) de la norme NF EN 12697-12.

La résistance à l'orniérage des revêtements de voirie selon l'invention a été mesurée en suivant le protocole de la norme NF EN 12697-22.

Le module de rigidité des revêtements de voirie selon l'invention a été mesurée en suivant le protocole de la norme NF EN 12697-26.

La fatigue ε₆ des revêtements de voirie selon l'invention a été mesurée en suivant le protocole de la norme NF EN 12697-24.

Les résultats des différentes mesures sont répertoriés dans le tableau 2 ci-dessous.

**[Tableau 2]**

| | E1 | E2 | E3 | E4 | E5 | E6 | E7 | E8 |
|---|---|---|---|---|---|---|---|---|
| PCG - V60 g (%) | | 6,9 | 8,1 | - | - | 4,9 | | 7,4 |
| ITSR (%) | | 85 | 88 | - | - | 94 | | 82 |
| Résistance à l'orniérage : PLD* 30 000 | | 4,4 | 4,4 | - | - | 7,7 | | 2,8 |
| Module : E* 15°C-10Hz | 10300 | 9000 | 8500 | 5300 | 5000 | 5800 | 4000 | |
| Fatigue : ε₆ 10°C-25Hz | | 104 | - | - | - | 117 | | |

Ainsi, les revêtements E1, E2, E3 et E8 entrent dans la catégorie des Béton Bitumineux Semi Grenu (BBSG) de classe 3. E6 est un BBSG de classe 1. E4, E5 et E7 correspondent à des catégories d'enrobés moins performants. Ils peuvent tous être utilisés comme revêtement de surface (couche de roulement et/ou de liaison), tel que spécifié dans la norme NF EN 13108-1.

## Revendications

1. Revêtement de voirie comprenant :
a) des granulats,
b) de la poix,
c) du bitume,
d) au moins un polymère,
et présentant un ratio massique poix sur bitume compris entre 0,35 et 2, préférentiellement entre 0,35 et 1,8, plus préférentiellement entre 0,35 et 1,5 et encore plus préférentiellement entre 0,35 et 1.

2. Revêtement selon la revendication 1, **caractérisé en ce qu'**il est à une température comprise entre 90°C et 150°C, de préférence entre 100°C et 140°C.

3. Revêtement selon l'une des revendications 1 à 2, **caractérisé en ce qu'**au moins une partie des granulats provient d'agrégats d'enrobés.

4. Revêtement selon l'une des revendications 1 à 3, **caractérisé en ce que** la poix est de la poix d'huile de tall.

5. Revêtement selon l'une des revendications 1 à 4, **caractérisé en ce que** le bitume est choisi parmi les bitumes routiers, de préférence parmi les bitumes de grades 20/30, 30/45, 35/50, 40/60, 50/70, 100/150 et 160/220, le bitume de grade 50/70 étant particulièrement préféré.

6. Revêtement selon l'une des revendications 1 à 5, **caractérisé en ce qu'**au moins une partie, de préférence 100%, du bitume est un bitume recyclé, provenant de préférence d'agrégats d'enrobés.

7. Revêtement selon l'une des revendications 1 à 6, **caractérisé en ce que** le polymère est choisi dans le groupe comprenant les polyoléfines, les composés à base de styrène-butadiène, le styrène-butadiène-styrène (SBS), le styrène-polyisopropène-styrène, le polystyrène-b-poly(éthylène-butylène)-b-polystyrène, les esters de vinyle et de butyle, les polyuréthannes et leurs mélanges, de préférence le polymère est le SBS.

8. Revêtement selon l'une des revendications 1 à 7, **caractérisé en ce qu'**il présente une déformation à l'orniérage inférieure ou égale à 10%, de préférence à 7,5%, de plus grande préférence à 5% après 30 000 cycles et/ ou une déformation à l'orniérage inférieure ou égale à 15%, de préférence à 10%, de plus grande préférence à 7,5% après 10 000 cycles et/ou une déformation à l'orniérage inférieure ou égale à 15%, de préférence à 10% à 3 000 cycles, et/ou un ITSR d'au moins 70%, de préférence d'au moins 80%.

9. Procédé de préparation d'un revêtement de voirie selon l'une quelconque des revendications 1 à 8 comprenant une étape de mélange à une température comprise entre 90°C et 150°C, de préférence entre 100°C et 140°C des composés suivants :
a) des granulats,
b) de la poix,
c) du bitume,
d) au moins un polymère,
et présentant un ratio massique poix sur bitume compris entre 0,35 et 2,0, préférentiellement entre 0,35 et 1,8, plus préférentiellement entre 0,35 et 1,5 et encore plus préférentiellement entre 0,35 et 1.

10. Procédé selon la revendication 9, **caractérisé en ce que** le bitume et les agrégats sont introduits, au moins en partie sous forme d'agrégat d'enrobés.

11. Procédé selon l'une quelconque des revendications 9 ou 10, **caractérisé en ce que** le polymère est introduit sous forme de granulés comprenant ledit polymère et du bitume et/ou de la poix.

12. Procédé selon l'une quelconque des revendications 9 à 11, **caractérisé en ce qu'**il est réalisé dans une usine d'enrobage.
